Europäisches Patentamt

(19) European Patent Office

Office européen des brevets

(11) Publication number: **0 037 695**
**B1**

(12) **EUROPEAN PATENT SPECIFICATION**

(45) Date of publication of patent specification: **18.05.83**

(51) Int. Cl.³: **C 07 C 87/08, C 07 C 85/26**

(21) Application number: **81301358.8**

(22) Date of filing: **27.03.81**

(54) Methylamines purification process.

(30) Priority: **03.04.80 US 136998**

(43) Date of publication of application:
**14.10.81 Bulletin 81/41**

(45) Publication of the grant of the patent:
**18.05.83 Bulletin 83/20**

(84) Designated Contracting States:
**BE DE FR GB IT NL**

(56) References cited:
**DD - A - 118 414**

(73) Proprietor: **E.I. DU PONT DE NEMOURS AND COMPANY**
**Legal Department 1007 Market Street**
**Wilmington Delaware 19898 (US)**

(72) Inventor: **Binau, Douglas Eugene**
**1546 East Lee Street**
**Charleston West Virginia 25311 (US)**
Inventor: **Speicher, Emmett Joseph**
**111 Pinewood Road**
**Elkview West Virginia 25071 (US)**

(74) Representative: **Woodcraft, David Charles et al,**
**BROOKES & MARTIN High Holborn House 52/54**
**High Holborn**
**London, WC1V 6SE (GB)**

Courier Press, Leamington Spa, England.

Methylamines purification process

The invention relates to the purification of methylamines.

Methylamines are conventionally produced by the silica-alumina catalyzed reaction of methanol and ammonia at temperatures of 350—450°C and pressures of 200—350 psig. The reaction produces an equilibrium distribution of ammonia, trimethylamine, monomethylamine, dimethylamine, water, methanol and higher amine impurities. The methylamines are separated by distillation; and the unreacted ammonia, methanol and some methylamines are recycled to the reactor. Byproduct water is usually purged from the system.

The distillation of the crude product can be quite complex, depending upon the product mix desired. In most operations, the ammonia is first separated off by distillation under pressure. Thereafter, the methylamines are separated, both from each other and from the water and methanol, in additional distillation columns.

During the distillation of the methylamines, the higher amine impurities tend to become trapped in the refining train, usually in a column that takes a methylamine overhead and has a water-rich phase at the base. In such a column, the higher amines accumulate in certain regions of the column and when their concentration becomes high enough to restrict vapour-liquid traffic, the column floods, resulting in contamination of the distilled product.

An improved process for distillation of methylamines containing higher amine impurities is provided by the invention and comprises:— (i) feeding crude methylamines into a distillation column and (ii) taking off a methylamines fraction as overhead and a water-rich phase as bottoms; characterized by (a) purging the distillation column, at an area where the impurities concentrate, at a rate sufficient to maintain the impurities level below the flooding or upset concentration; (b) adding water (eg. salt water) to the impurities-containing purge to form a water-immiscible phase containing impurities and a water phase containing methylamines, the amount of water added being sufficient to keep the methylamines content of the water phase at 25% by weight or less; (c) cooling the water-immiscible phase and the water phase to a temperature below the boiling point of the impurities and aqueous methylamines; (d) separating the water layer from the water-immiscible higher amines layer; and (e) recycling the water layer to the process for recovery of its methylamines content.

By "methylamines" is meant any of monomethylamine (MMA), dimethylamine (DMA) or trimethylamine (TMA) or their mixtures.

The process of the invention results in substantial reduction or even elimination of process upset and product contamination caused by column flooding with purge flows less than about 2% of the total feed to the column. In operating the process, the yield loss can be held to less than 0.1% therefore providing a corresponding reduction in environmental disposal problems.

The purge is removed from the column at a rate sufficient to maintain the impurities level in the column below the flooding concentration. This rate can be determined by experience or analysis of the purge. In most embodiments, the total purge can range from 0.1—5% of the feed to the column. It is desirable to have the purge rate as small as possible, and rates of less than 2% of the feed flow are preferred.

Water is mixed with the purge to promote two liquid phases, a light phase containing the impurities and a heavier water phase that contains the methylamines. The amount of water added to the purge should be controlled so that the methylamines content of the water does not exceed 25% by weight. The process can be operated at concentrations as low as 1% by weight (although in practice not significantly less than 1% by weight), but the preferred concentration range will be between 10—20% by weight, with most preferred concentration being about 15% by weight. The light phase will normally contain about 80% by weight impurities.

In many cases, the solubility of organic impurities in the water phase can be decreased if one or more water-soluble inorganic bases and salts/or one or more water-soluble inorganic salts are added to the water. Preferred for use are bases such as the alkali and alkaline earth metal oxides and hydroxides (e.g. $Na_2O$, NaOH, BaO and $Ba(OH)_2$), neutral salts (e.g., NaCl, KCl and $Na_2SO_4$); and basic salts (e.g., $Na_2CO_3$, $Na_3PO_4$ and $Na_2B_4O_7$). The amount of salt or base added is not critical, and the maximum amount added is that necessary to form a three-phase system, i.e., three liquid or two liquid and one solid base.

In step (C), the water purge mixture is cooled to a temperature below the boiling point of any of the impurities and aqueous methylamines present. When operating at atmospheric pressure, the temperature after cooling is about 20—40°C. This cooling is desired to avoid flashing of the methylamines from the water phase during separation and to reduce the solubility of the impurities in the water phase. The higher the temperature, the more likely the methylamines will flash, and the higher the methylamine concentration in the water phase, again it is more likely that flashing will occur. At atmospheric pressure, the preferred temperature is about 30°C and the preferred concentration of methylamine is about 15% by weight. The cooled water-purge mixture is then separated into its two component phases.

The following is a description, by way of example only, of one embodiment of the invention, reference being made to the accompanying schematic drawing which is a flow diagram of the process.

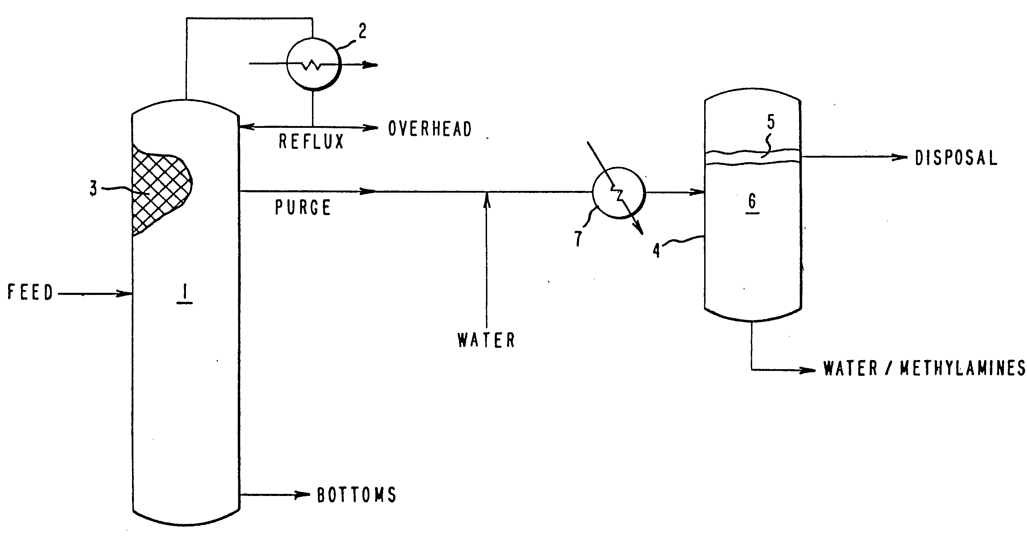

Crude methylamine is manufactured in a reactor by a conventional method and a resulting crude methylamine stream is fed to the distillation column 1 shown in the drawing. In the production of the crude methylamine trace impurities are also manufactured. These impurities are predominantly higher amines and include higher alkylamines and diamines, alkylsubstituted pyridines and pyrroles, and aliphatic amides. As indicated earlier, the impurities have physical properties that cause them to trap or accumulate in various columns in a refining train. This accumulation can occur in several regions of a column that has a methylamines overhead and a water-rich phase at the base.

When the impurities accumulate to a sufficient extent to restrict vapor-liquid traffic within the column, the column will flood. This flooding causes a process upset and product contamination.

The distillation column 1 contains the appropriate number of trays. In this column, the crude methylamine stream is distilled under pressure, e.g., 150 psig, to produce a water-rich bottoms phase and a methylamine overhead. The overhead is condensed in condenser 2 and part fed back into the column 1 as reflux, the remainder being taken off as raffinate for further refining or storage or recycle to synthesis.

In region 3 in the column, the concentration of the higher amine impurities is at or near its maximum. The locality of this region can be determined by tray-to-tray analysis of the column composition, and a purge will preferably be taken from the region of the column having the highest impurity concentration. In some embodiments, there will be several regions in the column where the impurities concentrate; in such cases, the purge can be taken from more than one region.

The purge will be removed from the column at a rate sufficient to maintain the impurities level in the column below the flooding concentration. This rate can be determined by experience or analysis of the purge. As mentioned earlier, it is desirable to have the purge rate as small as possible, and rates of less than 2% of the feed flow are preferred.

Water is then mixed with the purge to promote two liquid phases, a light phase containing the impurities and a heavier water phase that contains the methylamines. The amount of water added to the purge should be controlled so that the methylamine content of the water is at the most preferred 15% by weight level mentioned earlier. The light phase will contain around 80% by weight impurities.

Salt or base is added to the water, as mentioned earlier, to ensure formation of a three-phase system. The water-purge mixture is then cooled to a temperature below the boiling point of any of the impurities and aqueous methylamines present in a cooler 7; at atmospheric pressure this is about 20—40°C.

The cooled water-purge mixture is fed into a decanter 4 or other liquid-liquid phase separator where the two phases are formed. The light phase 5 containing about 80% impurities, i.e., the higher boiling amines, is then removed from the decanter for disposal or other use. The water phase 6 containing the methylamines is then recycled to the distillation train for recovery of the methylamines.

The process permits the continuous removal of impurities to maintain column stability and product quality with a minimum yield loss. The addition of water or water with base or salt promotes the formation of the two phases, and 50—80% of the impurities present are removed.

Examples

The following Examples are intended further to illustrate the invention:—

Example 1

One hundred parts of purge (43% water, 49.4% methylamines, 7.6% impurities) are mixed with 265 parts of water and cooled to 25°C. The resulting two-phase system is decanted. The upper-liquid phase, 5.2 parts analyzed: 0.7% $H_2O$, 10.6% methylamines and 88.7% impurities. The lower liquid phase, 359.8 parts, analyzed: 85.6% $H_2O$, 13.6% methyl-amines and 0.8% impurities.

Example 2

One hundred parts of purge (49.9% $H_2O$, 45.7% methylamines, 4.4% impurities) are mixed with 300 parts of 5% NaOH in water and cooled to 25°C. The resulting two-phase system is decanted. The upper liquid phase, 2.6 parts, analyzed: 0.9% $H_2O$, 8.4% methylamines and 90.7% impurities. The lower liquid phase, 397.4 parts, analyzed: 3.8% NaOH, 84.3% $H_2O$, 11.4% methylamines and 0.5% impurities.

**Claims**

1. A process of distilling crude methylamines which process comprises (i) feeding crude methylamines into a distillation column and (ii) taking off a methylamines fraction as overhead and a water-rich phase as bottoms; characterized by (a) purging the distillation column at an area where the impurities concentrate, at a rate sufficient to maintain the impurities level below the flooding or upset concentration; (b) adding water to the impurities-containing purge to form a water-immiscible phase containing impurities and a water phase containing methylamines, the amount of water added being sufficient to keep the methylamines content of the water phase at 25% by weight or less; (c) cooling the water-immiscible phase and the water phase to a temperature below the boiling point of the impurities and aqueous methylamines; (d) separating the two phases; and (e) recycling the water phase for recovery of its methylamines content.

2. A process as claimed in Claim 1 wherein the water of the water phase formed in step (b) contains a water-soluble inorganic base or salt.

3. A process as claimed in Claim 2 wherein the base or salt is $Na_2O$, NaOH, BaO, $Ba(OH)_2$, NaCl, KCl, $Na_2SO_4$, $Na_2CO_3$, $Na_3PO_4$ or $Na_2B_4O_7$.

4. A process as claimed in any one of Claims 1 to 3 wherein the amount of water added in step (b) maintains the methylamines content of the water phase below 15% by weight.

5. A process as claimed in any preceding claim wherein the cooling in step (c) is effected at atmospheric pressure to reduce the temperature of the phases to a value from 20°C to 40°C.

6. A process as claimed in any preceding claim wherein the separation of the two phases in step (d) is conducted using a decanter.

**Patentansprüche**

1. Verfahren zum Destillieren roher Methylamine, durch i) Beschicken roher Methylamine in eine Destillationskolonne; ii) Entnahme einer Methylamine-Fraktion über Kopf und einer wasserreichen Phase als Bodenprodukte, gekennzeichnet durch a) Spülen der Destillationskolonne an einer Stelle, an der sich die Verunreinigungen konzentrieren, wobei die Spülungsrate ausreicht, um die Konzentration der Verunreinigungen unterhalb der Überschwemmungs-oder Umkippkonzentration zu halten; b) Zusatz von Wasser zu der die Verunreinigungen enthaltenden Spülung unter Bildung einer mit Wasser nicht mischbaren Phase, die die Verunreinigungen enthält, und einer Wasserphase, die Methylamine enthält, wobei die Menge des zugesetzten Wassers ausreicht, um den Methylamingehalt der Wasserphase bei 25 Gew.% oder derunter zu halten; c) Kühlen der mit Wasser nicht mischbaren Phase und der Wasserphase auf eine Temperatur unter dem Siedepunkt der Verunreinigungen und wäßrigen Methylamine; d) Trennen der beiden Phasen; und e) Recycling der Wasserphase zur Gewinnung ihres Methylamingehalts.

2. Verfahren nach Anspruch 1, bei dem das Wasser der in der Stufe b) gebildeten wäßrigen Phase eine wasserlösliche anorganische Base oder Salz enthält.

3. Verfahren nach Anspruch 2, in dem die Base oder das Salz $NaO_2$, NaOH, BaO, $Ba(OH)_2$, NaCl, KCl, $Na_2SO_4$, $Na_2CO_3$, $Na_3PO_4$ oder $Na_2B_4O_7$ ist.

4. Verfahren nach einem der Ansprüche 1 bis 3, in dem die Menge des in der Stufe b) zugesetzten Wassers den Methylamingehalt der Wasserphase unter 15 Gew.% hält.

5. Verfahren nach einem der vorhergehenden Ansprüche, in dem die Kühlung in der Stufe c) bei atmosphärischem Druck zur Verringerung der Temperatur der Phasen auf einen Wert von 20°C bis 40°C durchgeführt wird.

6. Verfahren nach einem der vorhergehenden Ansprüche, bei dem die Trennung der beiden Phasen in der Stufe d) unter Verwendung einer Dekantiervorrichtung durchgeführt wird.

**Revendications**

1. Un procédé de distillation de methylamines brutes, selon lequel: (i) on fait arriver les methylamines brutes dans une colonne de distillation; (ii) on prélève une fraction de méthylamines comme distillat de tête et une phase riche en eau comme residu; caractérisé en ce que (a) on purge la colonne de distillation dans une région où les impuretés se concentrent à un débit suffisant pour maintenir le taux d'impuretés en-dessous de la concentration d'engorgement ou de perturbation; (b) on ajoute de l'eau à la purge contenant les impuretés de manière à former une phase nonmiscible avec l'eau contenant les impuretés et une phase aqueuse contenant les methylamines, la quantité d'eau ajoutée étant suffisante pour maintenir la teneur en méthylamines de la phase aqueuse à 25% en poids ou moins; (c) on refroidit la phase non-miscible avec l'eau et la phase aqueuse à une température au-dessous du point d'ébullition des impuretés et des methylamines aqueuses; (d) on sépare les deux phases, et (e) on recycle la phase aqueuse pour récupération des méthylamines qu'elle contient.

2. Un procédé selon la revendication 1, dans lequel l'eau de la phase aqueuse formée dans l'étape (b) contient une base ou un sel inorganique soluble dans l'eau.

3. Un procédé selon la revendication 2, dans lequel la base ou le sel est $Na_2O$, NaOH, BaO, $Ba(OH)_2$, NaCl, KCl, $Na_2SO_4$, $Na_2CO_3$, $Na_3PO_4$ ou $Na_2B_4O_7$.

4. Un procédé selon l'une quelconque des revendications 1 à 3, dans lequel la quantite d'eau ajoutée dans l'étape (b) maintient la teneur en méthylamines de la phase aqueuse au-dessous de 15% en poids.

5. Un procédé selon l'une quelconque des revendications précédentes, dans lequel le refroidissement dans l'étape (c) est effectue sous la pression atmosphérique de façon à abaisser la température des deux phases à un niveau compris entre 20°C et 40°C.

6. Un procédé selon l'une quelconque des revendications précédentes, dans lequel on conduit la séparation des deux phases dans l'étape (d) en utilisant un décanteur.

0 037 695